# EUROPÄISCHE PATENTSCHRIFT

(11) **EP 2 620 351 B1**
(45) Veröffentlichungstag und Bekanntmachung des Hinweises auf die Patenterteilung: **01.06.2016**
(21) Anmeldenummer: 13150125.6
(22) Anmeldetag: 03.01.2013
(51) Int. Cl.: B62D 15/02, G01S 15/93

(54) **Verfahren zur Unterstützung eines Fahrers beim Vorwärtseinparken**
Method to assist a driver when front parking
Procédé destiné à assister un conducteur lors du stationnement en avant

(30) Priorität: 26.01.2012 DE 102012201112
(43) Veröffentlichungstag der Anmeldung: 31.07.2013
(73) Patentinhaber: ROBERT BOSCH GMBH, 70442 Stuttgart (DE)
(72) Erfinder: Starke, Arwed, 70563 Stuttgart (DE); Pampus, Christian, 71229 Leonberg (DE)

(56) Entgegenhaltungen:
- EP-A1- 2 345 572
- EP-A1- 2 364 898
- EP-A2- 2 289 768
- WO-A1-2013/056959
- DE-A1-102009 024 083
- DE-A1-102009 060 169

## Beschreibung

### Stand der Technik

Die Erfindung betrifft ein Verfahren zum Durchführen eines mindestens zweizügigen Fahrmanövers beim zumindest semi-automatischen Vorwärtseinfahren mit einem Fahrzeug in einen seitlich der Fahrbahn gelegenen, begrenzten Bereich. Die Erfindung betrifft zudem ein Verfahren zur Unterstützung eines Fahrers beim zumindest semi-automatischen Vorwärtseinparken sowie eine Vorrichtung und ein Computerprogramm zur Durchführung der Verfahren.

Fahrerassistenzsysteme sind Zusatzeinrichtungen in einem Fahrzeug, die der Unterstützung des Fahrers in bestimmten Fahrsituationen dienen. Dazu umfasst ein Fahrerassistenzsystem mehrere Subsysteme wie einen Einparkassistenten, eine Totwinkelüberwachung oder einen Spurwechselassistenten. Typischerweise nutzen diese Subsysteme Daten von am Fahrzeug verbauter Umfeldsensorik, die durch Sensoren, wie optischen Sensoren, Ultraschallsensoren oder dergleichen, das Umfeld des Fahrzeuges überwachen. Eine typische Funktionalität von Fahrerassistenzsystemen beinhaltet, dem Fahrer einzelne Fahrmanöver, insbesondere das Einparken, abzunehmen und das Fahrmanöver (semi-)automatisch durchzuführen.

Unterschieden werden hierbei automatische und semi-automatische Systeme. Bei automatischen Systemen wird das durchzuführende Fahrmanöver automatisch vom Fahrassistenzsystem sowohl hinsichtlich Längsführung als auch hinsichtlich Querführung durchgeführt. Bei semi-automatischen Systemen führt der Fahrer des Fahrzeugs entweder die Längsführung durch, das heißt Bremsen und Beschleunigen des Fahrzeugs, und die Querführung wird vom Fahrassistenzsystem übernommen oder die Querführung, das heißt die Lenkung des Fahrzeugs, wird vom Fahrer des Fahrzeugs durchgeführt und die Längsführung vom Fahrassistenzsystem. Schließlich sind auch noch Systeme am Markt verfügbar, die den Fahrer des Fahrzeugs über Abstände zu Objekten in der Umgebung des Fahrzeuges informieren. Derzeit erhältliche Fahrassistenzsysteme unterstützen den Fahrer des Fahrzeugs im Allgemeinen beim Einparken, insbesondere beim Rückwärtseinparken in eine Längsparklücke.

Neben der Unterstützung beim Rückwärtseinparken in eine Längsparklücke kann auch eine Unterstützung beim Vorwärtseinparken gewünscht sein. So ist zum Beispiel in DE 10 2009 039 084 A1 oder in DE 10 2010 010 652 A1 offenbart, einen Fahrer eines Fahrzeugs beim Einparken in eine Querparklücke zu unterstützen. Hierbei kann der Fahrer zum Beispiel beim Vorwärtseinparken in die Querparklücke unterstützt werden. Die Unterstützung kann beispielsweise dann aktiviert werden, wenn der Fahrer den Einparkvorgang bereits begonnen hat und das Fahrzeug teilweise in die Querparklücke eintaucht. Zur Unterstützung wird dann eine Bahn berechnet, entlang der das Fahrzeug zu bewegen ist, um den Einparkvorgang fortzusetzen. Wenn ein Vorwärtseinparken in einem Zug nicht möglich ist, ist auch vorgesehen, dass zunächst ein Rückfahrzug durchgeführt wird, an den sich dann ein Vorwärtsfahrzug anschließt, mit dem das Fahrzeug in die Querparklücke eingeparkt wird. Nachteilig bei dem beschriebenen Verfahren ist insbesondere, dass bei einer nicht optimalen Ausrichtung des Fahrzeugs oder bei Objekten, die die Fahrbahn auf der der Querparklücke gegenüberliegenden Seite begrenzen, eine große Anzahl an Fahrzügen notwendig sein kann, um das Fahrzeug in die gewünschte Endposition in der Querparklücke zu bringen.

Die DE 102009060169 A1 ist als nächstliegender Stand der Technik nach dem Oberbegriff des Anspruchs 1 zu sehen und zeigt ein Verfahren zum Vorwärtseinparken eines Fahrzeuges in eine Kopfparklücke, wobei eine Umfeldsensorik Umfelddaten und Hindernisse im Umfeld erfasst. Während einer Vorbeifahrt des Fahrzeuges an der Kopfparklücke wird diese vermessen und dann eine Einparktrajektorie zum Vorwärtseinparken relativ zum aktuellen Ort des Fahrzeuges errechnet, wobei umfasst ist, dass das Fahrzeug zunächst mit einer Rückwärtsbewegung so ausgerichtet wird, dass es mit einer nachfolgenden Vorwärtsbewegung in die Kopfparklücke einparken kann. Alternativ erfolgt kein vorhergehendes Ausmessen der Kopfparklücke, sondern der Fahrer nimmt eine für den Vorwärtseinparkvorgang günstige Ausgangsposition an. Die Einparktrajektorie basiert auf einem bestimmten aktuellen Lenkwinkel, welcher erlaubt, dass das Fahrzeug bei einer Vorwärtsrangierbewegung eine maximal freie Weglänge zurücklegen kann, ohne auf ein Hindernis zu treffen.

### Offenbarung der Erfindung

### Vorteile der Erfindung

Erfindungsgemäß wird ein Verfahren zum Durchführen eines mindestens zweizügigen Fahrmanövers beim zumindest semi-automatischen Vorwärtseinfahren mit einem Fahrzeug in einen seitlich der Fahrbahn gelegenen, begrenzten Bereich vorgeschlagen, wobei eine Bahn zum Vorwärtseinfahren mindestens einen Rückfahrzug gefolgt von mindestens einem Vorwärtsfahrzug umfasst, mit folgenden Schritten:
a) zyklisches Bereitstellen von Umfelddaten mit Umfeldsensorik und Auswerten der Umfelddaten in Bezug auf den begrenzten Bereich und Objekte, die dem begrenzten Bereich gegenüberliegen;
b) Bestimmen einer Bahn in Abhängigkeit von dem begrenzten Bereich und Objekten, die dem begrenzten Bereich gegenüberliegen; und
c) zumindest semi-automatisches Bewegen des Fahrzeuges entlang der in Schritt b) bestimmten Bahn, wobei mindestens ein Rückfahrzug oder mindestens ein Vorwärtsfahrzug der Bahn in Abhängigkeit von dem begrenzten Bereich und Objekten, die dem begrenzten Bereich gegenüberliegen, während des Fahrmanövers angepasst wird.

Erfindungsgemäß wird zudem ein Verfahren zur Unterstützung eines Fahrers beim zumindest semi-automatischen Vorwärtseinfahren mit einem Fahrzeug in einen seitlich der Fahrbahn gelegenen, begrenzten Bereich mit folgenden Schritten vorgeschlagen:
i) Bereitstellen von Umfelddaten mit Umfeldsensorik und Auswerten der Umfelddaten in Bezug auf den begrenzten Bereich und Objekte, die dem begrenzten Bereich gegenüberliegen;
ii) Einleiten eines zumindest semi-autonomen Fahrmanövers in Reaktion auf ein Aktivierungssignal;
iii) Prüfen, ob das Vorwärtseinfahren in einem Vorwärtsfahrzug möglich ist;
iv) Durchführen des vorstehend beschriebenen, mindestens zweizügigen Fahrmanövers, wenn das Vorwärtseinfahren in einem Vorwärtsfahrzug nicht möglich ist.

Im vorliegenden Zusammenhang bezeichnet ein seitlich einer Fahrbahn gelegenener, begrenzter Bereich insbesondere eine Querparklücke oder eine Durchfahrt, die beidseitig von erhabenen Objekten begrenzt ist. Beim Vorwärtseinfahren in derartige Bereiche ist aufgrund der Begrenzungen des begrenzten Bereiches beispielsweise ein Einfahren in einem Zug ohne Ausscheren nicht möglich. Das heißt, dass der Fahrer zum Einfahren in den begrenzten Bereich eine spitze Kurve im Winkel von weniger als 100°, beispielsweise eine Kurve mit einem Winkel von 90°, zu befahren hat. Dies können insbesondere Querparklücken sein, die seitlich der Fahrbahn angrenzende Abstellflächen für Fahrzeuge darstellen, deren Längsachse in einem Winkel größer 0° und kleiner 180°, bevorzugt zwischen 70° und 110°, beispielsweise bei einem Winkel von 90°, zur Längsachse der Fahrbahn orientiert ist. Auch Durchfahrten, wie seitlich bebaute Straßen, von Mauern begrenzte Einfahrten, etwa Parkhauseinfahrten, oder sonstige von erhabenen Objekten begrenzte Fahrwege, die seitlich von der Fahrbahn abzweigen, können derartige Bereiche darstellen.

Durch das erfindungsgemäße Verfahren wird der Fahrer eines Fahrzeugs beim Vorwärtseinfahren mit einem Fahrzeug in einen seitlich einer Fahrbahn gelegenen, begrenzten Bereich unterstützt. Hierbei sind mindestens zwei und bevorzugt maximal vier Fahrzüge erforderlich, um das Fahrzeug in eine vorgesehene Endposition innerhalb des begrenzten Bereiches zu bringen. Da das Verfahren insbesondere auch dann durchgeführt werden kann, wenn sich das Fahrzeug in einer beliebigen der Querparklücke zugewandten Startposition innerhalb oder außerhalb der Querparklücke befindet, ist anders als bei aus dem Stand der Technik bekannten Verfahren eine Vorbeifahrt an dem seitlich gelegenen, begrenzten Bereich zur Vermessung vor der Durchführung des Fahrmanövers nicht notwendig. Durch die Anpassung der Bahn, entlang der das Fahrmanöver in Abhängigkeit von dem begrenzten Bereich und Objekten, die dem begrenzten Bereich gegenüberliegen, durchgeführt wird, passt sich das erfindungsgemäße Verfahren auch während des mindestens zweizügigen Fahrmanövers situationsbedingt an die Umgebungsbedingungen an. Insbesondere kann in Abhängigkeit von dem zur Verfügung stehenden Rangierraum der mindestens eine Rückfahrzug oder der mindestens eine Vorwärtsfahrzug angepasst werden. Dabei bezeichnet der Rangierraum den Raum, der durch den begrenzten Bereich und durch Objekte, die dem begrenzten Bereich gegenüberliegen, begrenzt ist und in dem das Fahrzeug kollisionsfrei bewegt werden kann.

Um dem Fahrer während des Einparkmanövers ausreichend Unterstützung bieten zu können, ist es notwendig, während des gesamten Fahrmanövers die Umgebung des Fahrzeugs zu erfassen. Die Erfassung der Umgebung erfolgt dabei mit üblichen Sensoren, die zur Umfelderfassung eingesetzt werden. Derartige Sensoren sind zum Beispiel Abstandssensoren wie Ultraschallsensoren, Infrarotsensoren, Radarsensoren oder LIDAR-Sensoren. Alternativ oder zusätzlich können auch andere optische Sensoren, beispielsweise Kameras mit einer geeigneten Bildverarbeitung zur Erfassung der Umgebung, eingesetzt werden.

Das Fahrmanöver kann entweder automatisch oder semi-automatisch durchgeführt werden. Bei einer automatischen Durchführung werden sowohl die Längsführung, das heißt Bremsen, Geschwindigkeit halten und Beschleunigen, als auch die Querführung, das heißt Lenkbewegungen, automatisch durchgeführt. Hierzu ist es zum Beispiel möglich, dass ein Steuergerät eines Fahrassistenzsystems, das zur Durchführung des Verfahrens eingesetzt wird, in die Motorsteuerung eingreifen kann, um beispielsweise das Fahrzeug zu beschleunigen. Weiterhin ist auch ein Eingriff in die Bremsanlage notwendig, um das Fahrzeug abbremsen oder anhalten zu können. Zur Durchführung der Querführung können zum Beispiel Stellmotoren vorgesehen sein, mit denen die lenkbaren Räder des Fahrzeugs gelenkt werden können. Bei einem automatischen System hat dann das Steuergerät des Fahrassistenzsystems auch Zugriff auf die Stellmotoren für die Lenkung.

Im Unterschied zu einem automatischen System wird bei einem semi-automatischen System nur die Längsführung oder nur die Querführung vom Fahrassistenzsystem durchgeführt. Im Übrigen muss der Fahrer des Fahrzeugs noch selber aktiv werden. In einer Ausführungsform wird sowohl die Längsführung als auch die Querführung vom Fahrer durchgeführt. In diesem Fall werden dem Fahrer Hinweise zu notwendigen Aktionen, beispielsweise zum Anhalten und Wechsel von Vorwärtsfahrt zu Rückwärtsfahrt und zu notwendigen Lenkbewegungen gegeben. Die Hinweise können zum Beispiel akustisch, beispielsweise durch eine Sprachausgabe, optisch, beispielsweise durch Anzeige geeigneter Symbole oder haptisch, bei Lenkbewegungen zum Beispiel durch Aufbringen eines Moments auf das Lenkrad, so dass ein Gefühl wie beim Fahren in einer Spurrille erzeugt wird, erfolgen.

Bei dem erfindungsgemäßen Verfahren beginnt die Bahn mit einem Rückfahrzug, auf den ein Vorwärtsfahrzug folgt, wobei die Bahn insbesondere während des Rückfahrzuges angepasst wird. Der Rückfahrzug kann dabei in einem ersten Abschnitt geradeaus gerichtet sein. Sobald vorne am Fahrzeug verbaute Umfeldsensorik eine zuletzt zu erfassende Bereichsecke während des Rückfahrzuges, insbesondere im ersten, geradeaus gerichteten Abschnitt des Rückfahrzuges, detektiert, kann die Bahn angepasst werden. In diesem Zusammenhang bezeichnet die zuletzt zu erfassende Bereichsecke die Bereichsecke, die die Umfeldsensorik während des ersten Rückfahrzuges, insbesondere im ersten, geradeaus gerichteten Abschnitt des Rückfahrzuges, beim sich Entfernen von dem begrenzten Bereich als Letzte erfasst. Die zuletzt erfasste Bereichsecke kann dabei initial, das heißt zum ersten Mal im Rahmen eines Fahrmanövers, detektiert werden, oder die Position der zuletzt erfassten Bereichsecke kann in Bezug auf bereits erfolgte Detektionen bestätigt beziehungsweise korrigiert werden. Typischerweise hängt dies von der Ausrichtung des Fahrzeuges zu dem begrenzten Bereich und der Geometrie des Bereiches ab. Dabei kann der Bereich eine oder zwei Bereichsecken umfassen. Durch das Detektieren der zuletzt erfassten oder als Letzte erfassten Bereichsecke kann die Bahn zum Vorwärtseinfahren insbesondere in Abhängigkeit von dem begrenzten Bereich, etwa dessen Geometrie und Breite, an die gegebenen Umgebungsbedingungen angepasst werden.

Erfindungsgemäß wird während des Rückfahrzuges ein Vorwärtsfahrzug angepasst, wobei überprüft wird, ob ein Vorwärtsfahrzug das Fahrzeug von dem begrenzten Bereich weglenken würde. Falls dies zutrifft, wird der Rückfahrzug so angepasst, dass das Weglenken vermieden wird. Unter dem Begriff Weglenken wird verstanden, dass sich das Fahrzeug zu der dem begrenzten Bereich gegenüberliegenden Seite hin bewegt, beispielsweise beim Ausscheren zu Beginn des Einfahrens in den begrenzten Bereich. Das Fahrzeug bewegt sich damit beim Weglenken nicht in einer Kurvenfahrt mit einem Lenkeinschlag nach links oder rechts auf den begrenzten Bereich zu, sondern bewegt sich von dem begrenzten Bereich weg.

In einer Ausführungsform des erfindungsgemäßen Verfahrens umfasst die Bahn einen ersten Rückfahrzug, der zumindest teilweise geradeaus gerichtet verläuft, wobei während der Rückwärtsfahrt der Rückfahrzug durch eine erste gefolgt von einer zweiten der ersten entgegengesetzten Kurvenfahrt angepasst wird, um das Fahrzeug in eine Position zu bringen, die das Einfahren in den begrenzten Bereich mit einem Vorwärtsfahrzug erlaubt. Der Vorwärtsfahrzug umfasst weiterhin ein Kreisbogensegment, das tangential in ein entlang einer Ausrichtungsgeraden gerichtetes Liniensegment übergeht. Hierbei kann die Kurvenfahrt eingeleitet werden, sobald die zuletzt zu erfassende Bereichsecke erfasst wird, und mit einem Lenkeinschlag zu der Ausrichtungsgeraden hin verläuft. Dadurch beansprucht der angepasste Rückfahrzug zwar mehr Rangierraum. Jedoch kann das Fahrzeug auf diese Weise in eine Endposition gebracht werden, die ein Einfahren in den begrenzten Bereich in einem Zug erlaubt. Insbesondere wird ein Weglenken von dem begrenzten Bereich vermieden, was für den Fahrer als unnatürliches Verhalten wahrgenommen wird.

In einer weiteren Ausführungsform des erfindungsgemäßen Verfahrens umfasst die Bahn einen zumindest teilweise geradeaus gerichteten Rückfahrzug, um das Fahrzeug in eine Position zu bringen, die das Einparken mit einem Vorwärtsfahrzug erlaubt. Die Bahn umfasst weiterhin einen angepassten Vorwärtsfahrzug, wobei der Vorwärtsfahrzug gegebenenfalls eine erste Kurvenfahrt in eine erste Richtung mit einem Lenkeinschlag, der dem begrenzten Bereich entgegen gerichtet ist, gefolgt von einem Kreisbogensegment in einer zweiten der ersten entgegengesetzten Richtung umfasst, wobei weiterhin das Kreisbogensegment stetig in ein Übergangssegment mit einem Winkel zur Ausrichtungsgeraden gefolgt von einer zweiten Kurvenfahrt mit einem Lenkeinschlag in die zweite Richtung in die Ausrichtungsgerade übergeht. Durch das Schrägstellen des Fahrzeuges beim Einfahren in den begrenzten Bereich kann die Endposition des Rückfahrzuges näher an dem begrenzten Bereich liegen. Somit beansprucht ein derartiges Fahrmanöver weniger Rangierraum und ermöglicht es, dass auch in Bereichen, denen Objekte gegenüberliegen, mit einem zweizügigen Manöver eingefahren werden kann. So wird die Notwendigkeit von mehr als zweizügigen Manövern reduziert, was für den Fahrer als natürliches Verhalten wahrgenommen wird.

Dabei kann das Übergangssegment tangential vom Kreisbogensegment verlaufen. Weiterhin kann der Winkel zwischen dem Übergangssegment und der Ausrichtungsgeraden bestimmt werden, sobald die zuletzt zu erfassende Bereichsecke während des zumindest teilweise geradeaus gerichteten Rückfahrzuges detektiert wird. Zu diesem Zeitpunkt kann eine Breite des begrenzten Bereiches bestimmt werden. Hierbei hängt insbesondere der Winkel zwischen dem Übergangssegment und der Ausrichtungsgeraden von der Breite des begrenzten Bereiches und fahrzeugspezifischen Abmessungen, wie Breite und Länge des Fahrzeuges, ab. So kann die Bahn während des Rückfahrzuges je nach Breite des begrenzten Bereiches und gegebenenfalls vorhandenen Objekten gegenüber des begrenzten Bereiches situationsbedingt an die Umgebungsbedingungen angepasst werden. Der Winkel kann demzufolge so bestimmt werden, dass der Vorwärtsfahrzug das Erreichen der Zielposition in dem begrenzten Bereich erlaubt.

Sobald das Fahrzeug in den begrenzten Bereich eingetaucht ist, kann das Bewegen des Fahrzeugs innerhalb des begrenzten Bereichs mit einem Regler durchgeführt werden, der den Abstand zu Begrenzungen des begrenzten Bereiches im Wesentlichen konstant hält, um einen lateralen Versatz des Fahrzeugs zur Ausrichtungsgeraden abzubauen und das Fahrzeug kollisionsfrei in die Zielposition zu steuern. Insbesondere wird dabei der Abstand einer vorderen Fahrzeugecke zu Begrenzungen des begrenzten Bereiches im Wesentlichen konstant gehalten.

In einer Ausführungsform des erfindungsgemäßen Verfahrens werden zumindest bei Generierung des Aktivierungssignals Umfelddaten mit einer Umfeldsensorik bereitgestellt und die Umfelddaten in Bezug auf den begrenzten Bereich und Objekte, die dem begrenzten Bereich gegenüberliegen, ausgewertet. Die Umfelddaten werden vorzugsweise vor Einleiten des zumindest semi-autonomen Fahrmanövers bereitgestellt und gespeichert. Beispielsweise können Daten betreffend die gefahrene Trajektorie und/oder Daten betreffend detektierte Objekte vor Einleiten des Fahrmanövers durch das Aktivierungssignal bereitgestellt und gespeichert werden, wenn die Geschwindigkeit unter eine vordefinierte Geschwindigkeitsschwelle fällt. Die Geschwindigkeitsschwelle kann beispielsweise bei 50 km/h, bevorzugt zwischen 5 und 30 km/h vordefiniert oder vom Fahrer eingestellt werden. So kann das Umfeld des Fahrzeuges bereits vor dem Durchführen eines zumindest semi-automatischen Fahrmanövers charakterisiert werden.

Weiterhin kann der begrenzte Bereich und/oder der Rangierraum durch vor der Aktivierung gespeicherte Umfelddaten charakterisiert werden, indem aus den gespeicherten Umfelddaten zumindest geschätzte Werte für die Abmessungen des begrenzten Bereiches und/oder des Rangierraumes bestimmt werden. Alternativ oder zusätzlich kann die befahrene Trajektorie mittels Parametern wie dem Gierwinkel, beispielsweise bestimmt aus einem Lenkradwinkel, und/oder der Fahrzeugposition, etwa aus einem Global Positioning System (GPS), gespeichert werden. Solche Daten können insbesondere zur Plausibilisierung der Fahrzeugposition und -ausrichtung beim Durchführen des erfindungsgemäßen Verfahrens dienen.

In einer weiteren Ausführungsform wird ein Aktivierungssignal zum Einleiten eines zumindest semi-autonomen Fahrmanövers bereitgestellt, wenn eine oder mehrere der folgenden Bedingungen erfüllt sind:
- das Fahrzeug befindet sich im Stillstand in einer dem begrenzten Bereich zugewandten Position, wobei die Position außerhalb des begrenzten Bereiches oder zumindest teilweise in dem begrenzten Bereich liegt, so dass zumindest ein Teil der Begrenzung des Bereiches, insbesondere eine erste und/oder eine zweite Eck- und/oder Seitenbegrenzung, von der Umfeldsensorik detektierbar ist, und/oder
- der Fahrer löst das Aktivierungssignal aus, indem ihm eine Aktivierungsmöglichkeit, wie ein Bedienelement, bereitgestellt wird, wenn zumindest eine zweite Eck- und/oder Seitenbegrenzung des Bereiches detektiert wird und/oder wenn ein aus bereitgestellten Umfelddaten bestimmter Rangierraum die Vorwärtseinfahrt in den begrenzten Bereich mit höchstens vier Fahrzügen erlaubt.

Nach Bereitstellen des Aktivierungssignals um ein zumindest semi-automatisches Fahrmanövers einzuleiten, kann die Bahnplanung anhand von gespeicherten Daten oder anhand von aktuellen Umfelddaten erfolgen. Dazu kann zunächst eine Zielposition und eine Ausrichtungsgerade in den begrenzten Bereich berechnet werden. Die Ausrichtungsgerade kann gemäß parametrierbarer Regeln zur Ausrichtung des Fahrzeugs innerhalb des begrenzten Bereiches sowie anhand der Vorbeifahrrichtung, der Ausrichtung der den Bereich begrenzenden Objekte und auch anhand von Bodenmarkierungen, sofern die Umfeldsensorik diese erfassen kann, bestimmt werden.

Anschließend wird geprüft, ob das Vorwärtseinfahren in einem Vorwärtsfahrzug möglich ist. Dazu können die gespeicherten Umfelddaten verwendet werden. Ist ein Vorwärtseinfahren in einem Vorwärtsfahrzug nicht möglich, wird ein mindestens zweizügiges Fahrmanöver wie vorstehend beschrieben initialisiert.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei der Computereinrichtung kann es sich beispielsweise um ein Modul zur Implementierung eines Fahrassistenzsystems, oder eines Subsystems hiervon, in einem Fahrzeug handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-Rom-DVD oder einem USB-Stick. Zusätzlich oder alternativ kann das Computerprogramm auf einer Computereinrichtung wie etwa einem Server zum Herunterladen bereitgestellt werden, zum Beispiel über ein Datennetzwerk, wie etwa das Internet oder eine Kommunikationsverbindung wie etwa eine Telefonleitung oder eine drahtlose Verbindung.

Erfindungsgemäß wird weiterhin eine Vorrichtung zur Durchführung des zuvor beschriebenen Verfahrens, insbesondere ein im Fahrzeug integriertes Fahrassistenzsystem, vorgeschlagen, das eine Umfeldsensorik zum Erfassen von einem seitlich der Fahrbahn gelegenen, begrenzten Bereich und zum Erfassen von Objekten, die dem Bereich gegenüberliegen, Mittel zur Bestimmung von Bahnen mit mindestens einem Rückwärtsfahrzug gefolgt von mindestens einem Vorwärtsfahrzug und Mittel zur Durchführung eines zumindest semi-automatischen Fahrmanövers entlang einer bestimmten Bahn, wobei mindestens ein Rückfahrzug oder mindestens ein Vorwärtsfahrzug der bestimmten Bahn in Abhängigkeit von dem begrenzten Bereich und Objekten, die dem begrenzten Bereich gegenüberliegen, während des Fahrmanövers angepasst wird.

Mit der Umfeldsensorik wird die Umgebung des Fahrzeugs vor und/oder während des Fahrmanövers erfasst. Eine Erfassung vor Beginn des Fahrmanövers ist zum Beispiel notwendig, um zu prüfen, ob tatsächlich eine geeignete Querparklücke vorliegt oder ob das Vorwärtseinfahren in einem Vorwärtsfahrzug möglich ist. Zudem werden die Daten der Umgebung benötigt, damit die für das Fahrmanöver notwendigen Trajektorien berechnet werden können, entlang denen die Fahrzüge durchgeführt werden. Die Umfeldsensorik umfasst zum Beispiel Abstandssensoren wie Ultraschallsensoren, Infrarotsensoren, Radarsensoren, LIDAR-Sensoren oder optische Sensoren wie Kameras.

Die Mittel zur Durchführung von für das Fahrmanöver erforderlichen Vorwärtsfahrzügen und Rückwärtsfahrzügen und die Mittel zur Bestimmung der Bahnen, entlang denen die Vorwärtsfahrzüge und Rückwärtsfahrzüge geführt werden, umfassen üblicherweise ein Steuergerät eines Fahrassistenzsystems mit einem Prozessor und einem Speichermittel mit einem Computerprogramm zur Berechnung der Bahnen. Das Steuergerät kann dabei ein eigenständiges Steuergerät sein oder mehrere Funktionen in einem Gerät verknüpfen.

### Kurze Beschreibung der Zeichnungen

Ausführungsbeispiele der Erfindung sind in den Figuren dargestellt und werden in der nachfolgenden Beschreibung näher erläutert.

Es zeigen:
- Figuren 1.1 bis 1.6: schematische Darstellungen von typischen Positionen eines mit erfindungsgemäßem Fahrassistenzsystem ausgerüstetenKraftfahrzeuges beim Einparkvorgang in eine Querparklücke,
- Figur 2.1 und 2.2: schematische Darstellungen von typischen Fahrsituationen des Fahrzeuges gemäß Figur 1.1 beim Durchfahren einer engen Durchfahrt,
- Figur 3: eine Arbeitsweise des Fahrassistenzsystems aus Figur 1.1 in Form eines Flussdiagramms,
- Figur 4: ein beispielhaftes Einparkmanöver in zwei Fahrzügen, wobei ein Rückwärtsfahrzug an die Umgebungsbedingunen angepasst wird,

- Figur 5: ein weiteres beispielhaftes Einparkmanöver in zwei Fahrzügen, wobei ein Vorwärtsfahrzug an die Umgebungsbedingunen angepasst wird,
- Figur 6: ein weiteres beispielhaftes Einparkmanöver in mehr als zwei Fahrzügen.

Ausführungsformen der Erfindung

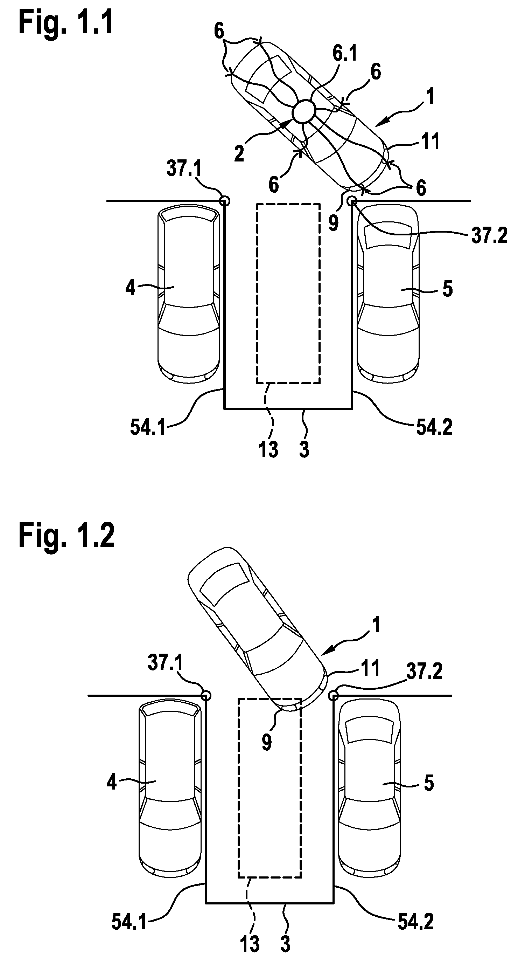

In den Figuren 1.1 bis 1.6 ist ein Fahrzeug 1 ausgerüstet mit einem erfindungsgemäßen Fahrassistenzsystem 2 in typischen Fahrsituationen gezeigt, in denen das Fahrzeug 1 einen Einparkvorgang in eine Querparklücke 3 durchführt. Um den Fahrer des Fahrzeuges 1 in derartigen Situationen zu unterstützen, sieht das erfindungsgemäße Fahrassistenzsystem 2 Ultraschallsensorik 6 vor, die vorne, seitlich und hinten am Fahrzeug 1 verbaute Ultraschallsensoren umfasst. Die Ultraschallsensorik 6 erfasst dabei insbesondere das Umfeld des Fahrzeuges 1 im Nahbereich und stellt die Daten einem Steuergerät 6.1 bereit. So dienen die vorderen und hinteren Ultraschallsensoren 6 zur Vermessung des begrenzten Raumes vor und hinter dem Fahrzeug 1. Zur Vermessung des seitlich begrenzten Raumes neben dem Fahrzeug 1 wird in den in den Figuren 1.1 bis 1.6 gezeigten Ausführungsformen pro Fahrzeugseite jeweils vorne ein Ultraschallsensor 6 mit einem großen Erfassungswinkel eingesetzt.

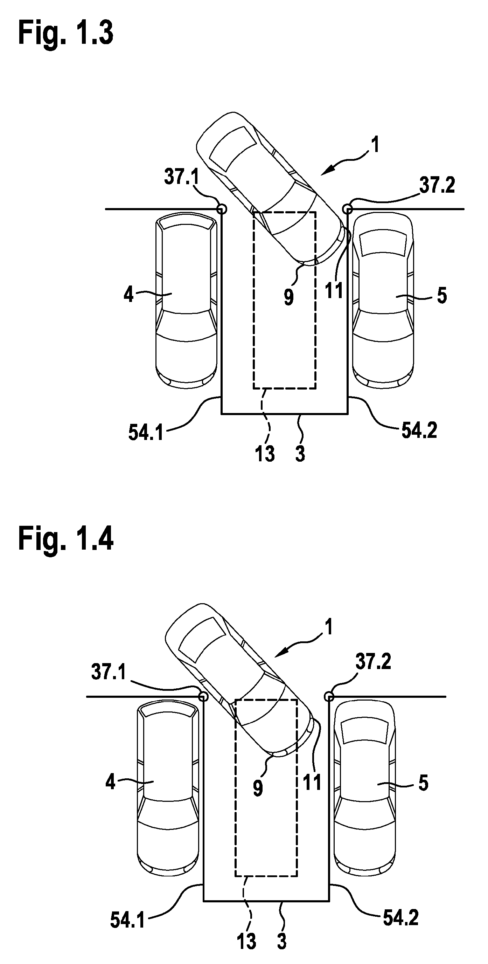

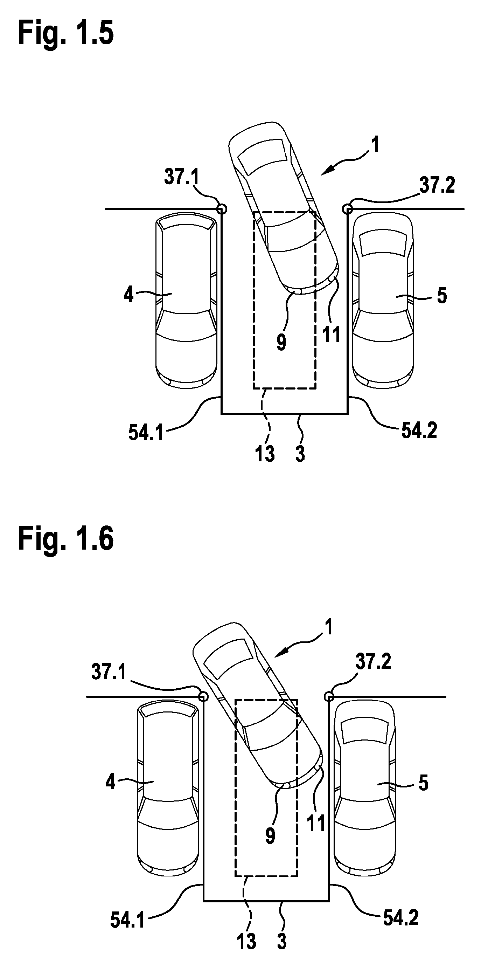

In einer anderen als der in Figur 1 gezeigten Ausführungsform kann die Ultraschallsensorik 6 auch andere Konfigurationen mit einem oder mehreren Ultraschallsensor(en) vorsehen, die das Fahrzeugumfeld erfassen. Zusätzlich oder alternativ kann das Fahrassistenzsystem 2 neben der Ultraschallsensorik 6 auch andere in Figur 1 nicht gezeigte Sensorsysteme, wie ein Kamerasystem, eine RADAR-System oder ein LIDAR-System umfassen. In den folgenden Figuren ist das Fahrassistenzsystem 2 des Fahrzeuges 1 der Übersichtlichkeit halber nicht dargestellt.

In den Figuren 1.1 bis 1.6 sind typische Positionen dargestellt, in denen sich ein Fahrzeug 1 vor dem endgültigen Einparken in die Querparklücke 3 befinden kann.

Im Allgemeinen wird der Fahrer des Fahrzeugs 1 bereits beim Anfahren einer Querparklücke 3 versuchen, vorwärts in die Querparklücke 3, die in der hier dargestellten Situation auf der in Fahrtrichtung gesehen rechten Seite von einem ersten Fahrzeug 4 und auf der linken Seite von einem zweiten Fahrzeug 5 begrenzt ist, einzuparken. In vielen Fällen erlaubt es die Situation jedoch nicht, mit nur einem Vorwärtsfahrzug in die Querparklücke 3 einzuparken. In diesen Fällen endet der Vorwärtsfahrzug in der Regel vor der Querparklücke 3 oder mit einem teilweise in die Querparklücke 3 eingetauchten Fahrzeug 1, wobei das Fahrzeug 1 eine Position schräg zur Achse der Querparklücke 3 einnimmt. Eine Fortführung des Vorwärtsfahrzuges ist in einer derartigen Situation typischerweise nicht möglich, da sonst eine Kollision mit einem Fahrzeug 4, 5 erfolgt, das auf einem der Querparklücke 3 benachbarten Parkplatz parkt.

Je nach Ausgangssituation kann das fahrende Fahrzeug 1 wie in den Figuren 1.1 und 1.2 dargestellt noch außerhalb der Querparklücke 3 positioniert sein oder zumindest mit seiner rechten vorderen Ecke 9 in die Querparklücke 3 eintauchen. Die linke vordere Ecke 11 befindet sich noch außerhalb der Querparklücke 3. Selbst bei Vollausschlag der lenkbaren Räder würde eine Fortführung des Vorwärtsfahrzuges zu einer Kollision mit dem die Querparklücke 3 begrenzenden zweiten Fahrzeug 5 führen. Wenn etwas mehr Platz für den Vorwärtsfahrzug zur Verfügung steht, kann das fahrende Fahrzeug 1 wie in den Figuren 1.3 und 1.4 dargestellt zum Stehen kommen. In diesem Fall taucht das Fahrzeug 1 zwar bereits mit beiden vorderen Ecken 9, 11 in die Querparklücke 3 ein, aber eine Fortführung des Vorwärtsfahrzuges würde auch in diesem Fall zu einer Kollision mit einem der benachbarten Fahrzeuge 4, 5 führen, so dass der Vorwärtsfahrzug beendet werden muss.

Bei den in den Figuren 1.5 und 1.6 dargestellten Situationen ist das fahrende Fahrzeug 1 bereits bis zur Hälfte in die Querparklücke 3 eingetaucht. Je nach Abstand zum benachbarten Fahrzeug 5 besteht in diesem Fall die Möglichkeit, dass der Fahrzug ohne Kollision fortgesetzt werden kann oder aber eine Kollision mit einem der benachbarten Fahrzeuge 4, 5 droht. Selbst wenn eine Fortsetzung möglich wäre, führt dies bei den in den Figuren 1.5 und 1.6 dargestellten Situationen jedoch dazu, dass das Fahrzeug 1 zu nah am benachbarten Fahrzeug 5 zum Stehen kommt, so dass zum Beispiel ein Aussteigen nicht mehr möglich ist.

In allen in den Figuren 1.1 bis 1.6 gezeigten Situationen ist eine Korrektur erforderlich, um das Fahrzeug 1 in eine Zielparkposition 13 (hier als gestrichelte Linie dargestellt) einzuparken, die entlang der Achse der Querparklücke 3 mittig ausgerichtet ist.

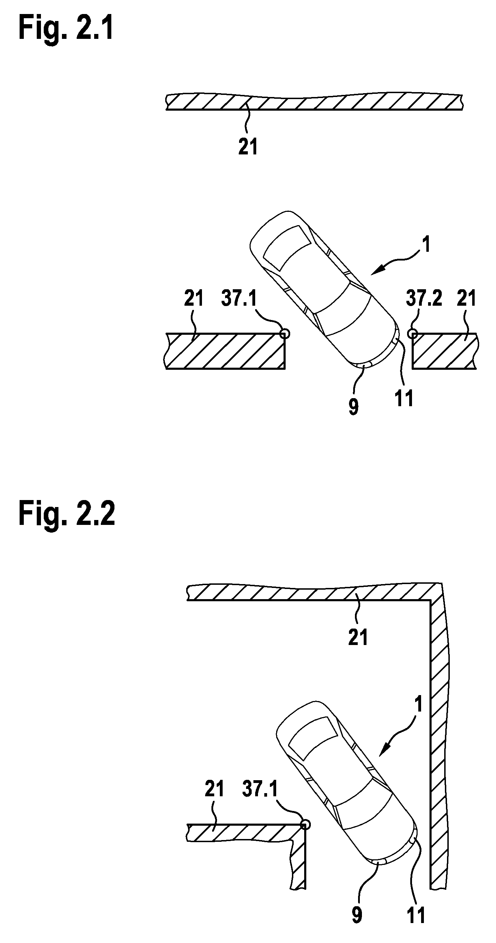

Weitere beispielhafte Fahrsituationen, in denen eine Fortführung des Vorwärtsfahrzuges wegen Kollisionsgefahr mit einer Begrenzung 21, beispielsweise einer Mauer, einem Busch, einem Baum, einer Hecke oder einem Haus, nicht möglich ist, sind in den Figuren 2.1 und 2.2 dargestellt. So kann eine derartige Situation beim Durchfahren von begrenzten Bereichen, etwa einer Parkhauseinfahrt, wie in Figur 2.1 gezeigt, oder einer engen Gasse, wie in Figur 2.2 gezeigt, auftreten.

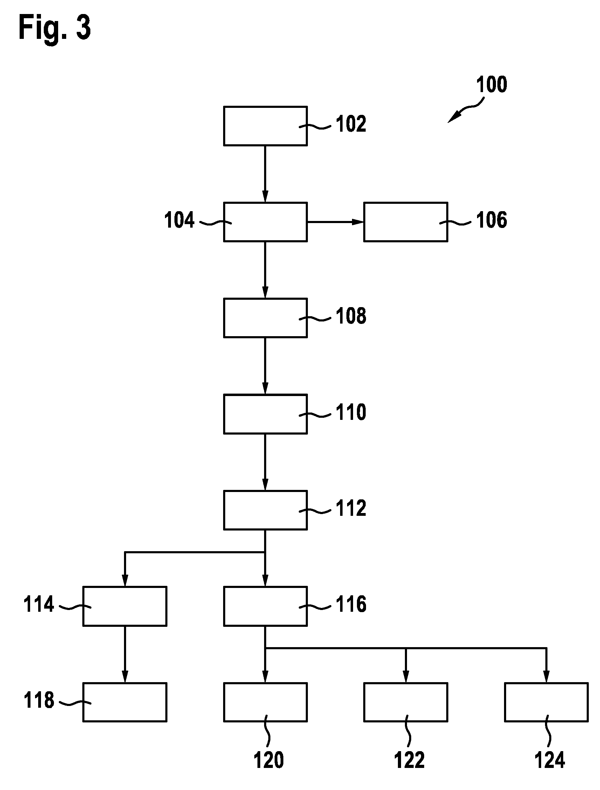

Figur 3 zeigt in Form eines Flussdiagramms 100 eine Arbeitsweise des erfindungsgemäßen Fahrassistenzsystems 2 gemäß der Figuren 1 und 2, anhand dessen das Zusammenwirken der Komponenten beschrieben wird.

In Schritt 102 des erfindungsgemäßen Verfahrens wird vor Aktivierung der zumindest semi-automatischen Fahrzeugführung das Umfeld des Fahrzeuges 1 erfasst und die Umfelddaten werden gespeichert. So werden dem erfindungsgemäßen Verfahren bei Aktivierung Daten bereitgestellt, die das Umfeld charakterisieren und schon während der Anfahrt auf die Querparklücke 3 gespeichert wurden. Typischerweise wird eine derartige Umfelderfassung unter vorbestimmten Bedingungen gestartet, beispielsweise wenn die Geschwindigkeit eine vorbestimmte Geschwindigkeitsschwelle unterschreitet. Fällt die Geschwindigkeitschwelle beispielsweise unter eine Geschwindigkeit von 50 km/h, bevorzugt 30 km/h, wird die Umfelderfassung gestartet.

Die vor Aktivierung der zumindest semi-automatischen Fahrzeugführung erfassten Daten können insbesondere Objekte 21, die die Querparklücke 3 begrenzen, die Dimension, die Geometrie und die Lage der Querparklücke 3, die gefahrene Anfahrtstrajektorie des Fahrzeuges 1 und/oder Objekte 21, die der Querparklücke 3 gegenüberliegen, umfassen. Die Umfelderfassung erfolgt dabei durch unterschiedliche Sensorik 6, beispielsweise Abstandssensoren zum Detektieren von Objekten, Lenkwinkelsensoren, GPS-Sensoren zum Detektieren der Fahrzeugposition und Magnetfeldsensoren zum Detektieren des Gierwinkels. So werden in Situationen, wie in den Figuren 1.1 bis 1.6, 2.1 und 2.2 gezeigt, während der Anfahrt auf die Querparklücke 3 beispielsweise die Ecke 37.2 oder die Seite 54.2 der Querparklücke 3 und Objekte 21, die der Querparklücke 3 gegenüberliegen, erfasst und gespeichert. Zusätzlich oder alternativ können für das Vorwärtseinparken typische Manöver, wie das Einscheren mit einem großen Lenkwinkel in Richtung der Querparklücke 3 oder das Ausscheren in Gegenrichtung zur Querparklücke gefolgt von dem Einscheren mit großem Lenkwinkel in Richtung der Querparklücke 3, anhand von Lenkwinkel- und Positionsdaten detektiert werden und die Gierwinkeländerung des Fahrzeuges 1 während des Einparkvorganges in Bezug auf eine vorherige Fahrtrichtung berechnet werden. Somit sind die Position und die Ausrichtung des Fahrzeuges 1 sowie zumindest Teile des Fahrzeugumfeldes vor Aktivierung der zumindest semi-automatischen Fahrzeugführung bekannt und können unmittelbar nach der Aktivierung zur Fahrzeugführung genutzt werden.

Die Aktivierung der zumindest semi-automatischen Fahrzeugführung erfolgt in Schritt 104 durch den Fahrer, dem dazu beispielsweise ein Bedienelement, etwa ein Knopf, ein Hebel, ein Schalter, ein Berührungsfeld auf einem Touchpad oder eine Aktivierung per Sprachsteuerung bereitgestellt wird. Die Möglichkeit der Aktivierung kann dabei von weiteren Bedingungen abhängen, etwa ob sich das Fahrzeug 1 außerhalb der Querparklücke 3 befindet oder zumindest teilweise in die Querparklücke 3 eingetaucht ist.

Befindet sich das Fahrzeug 1 außerhalb der Querparklücke 3, kann die Aktivierungsbedingung das Erkennen einer Querparklücke 3 aus Umfelddaten weiterer Umfeldsensorik 6 umfassen, beispielsweise Videoansichten eines am Fahrzeug 1 verbauten Kamerasystems, insbesondere mindestens einer frontseitig verbauten Kamera. Aus den Videoansichten werden die Querparklücke 3 sowie deren Geometrie, Lage und Abmessung bestimmt und daraus die Zielposition 13, die Zielausrichtung 29 und mögliche Trajektorien errechnet.

Das Bedienelement zur Aktivierung wird freigeschaltet, wenn beispielsweise die Querparklückenecke 37.2 oder die Querparklückenseite 54.2 von der Umfeldsensorik 6 des Fahrzeuges 1 detektiert wird. An dieser Stelle werden gegebenenfalls die vor der Aktivierung gespeicherten Daten zur weiteren Plausibilisierung eingesetzt. So geben vor Aktivierung gespeicherte Objektdaten Aufschluss über die Abmessungen, insbesondere die Breite, und die Lage der Querparklücke 3. Auch der zur Verfügung stehende Rangierraum, der durch Objekte 21, die der Querparklücke 3 gegenüberliegen, begrenzt ist, wird bestimmt. Weiterhin dient die vor Aktivierung gespeicherte Anfahrtstrajektorie zur Bestimmung der Fahrzeugorientierung, die gegebenenfalls in Kombination mit den gespeicherten Objektdaten relativ zur Querparklücke 3 spezifiziert wird.

Geht aus Schritt 104 und den damit einhergehenden Plausibilitätsprüfungen hervor, dass der Rangierraum zum Einparken in die Querparklücke 3 nicht ausreicht, das heißt ein Einparken selbst in mehreren Zügen nicht möglich ist, wird der Fahrer in Schritt 106 darüber informiert und die Aktivierung nicht zugelassen. Die Information wird dem Fahrer dabei akustisch, optisch und/oder haptisch über ein in dem Fahrassistenzsystem 2 integriertes HMI (Human Machine Interface, Mensch-Maschine-Schnitstelle) bereitgestellt. Dazu kann beispielsweise ein Hinweis auf einem Bildschirm oder über einen Lautsprecher an den Fahrer kommuniziert werden.

Geht aus Schritt 104 und den damit einhergehenden Plausibilitätsprüfungen hervor, dass der Rangierraum zum Einparken in die Querparklücke 3 ausreicht, werden in Schritt 108 die Zielausrichtung entlang einer Ausrichtungsgeraden 29 und die Zielposition 13 innerhalb der Querparklücke 3 bestimmt. Dazu werden die vor der Aktivierung in Schritt 102 gespeicherten Daten verwendet. Aus den in den Schritten 102 bis 108 kumulierten Daten werden schließlich in Schritt 110 mögliche Trajektorien berechnet und dem Fahrer in Schritt 112 die jeweiligen Optionen akustisch, optisch und/oder haptisch über ein HMI angeboten. Zusätzlich oder alternativ für den Fall, dass sich das Fahrzeug 1 außerhalb der Querparklücke 3 befindet, werden Daten weiterer Umfeldsensorik 6, etwa Videoansichten, zur Bestimmung der Zielausrichtung entlang einer Ausrichtungsgeraden 29 und der Zielposition 13 innerhalb der Querparklücke 3 sowie den sich daraus ergebenden Trajektorien verwendet.

Ist es möglich, ohne Kollision mit der Querparklückenbegrenzung 37.1, 37.2, 54.1, 54.2, 21, das heißt den Querparklückenseiten 54.1, 54.2 und Querparklückenecken 37.1, 37.2, die Zielposition 13 durch weitere Vorwärtsfahrt zu erreichen, wird dies dem Fahrer in Schritt 112 empfohlen. Dies kann beispielsweise durch einen Hinweis auf einem Bildschirm oder über einen Lautsprecher an den Fahrer kommuniziert werden. Diese Option wird in Schritt 114 automatisch ausgewählt oder von dem Fahrer durch ein Bedienelement, etwa durch Drücken eines Knopfes, bestätigt.

Ist der Vorwärtsfahrzug in die Zielposition 13 mit der Zielausrichtung entlang der Ausrichtungsgeraden 29 nicht möglich, wird dem Fahrer in Schritt 112 empfohlen, den Rückwärtsgang einzulegen, und es werden Bahnen bestimmt, die zumindest zwei Züge umfassen. Sind sowohl Rückfahrzug als auch Vorwärtsfahrzug ohne Kollision mit der Querparklückenbegrenzung 37.1, 37.2, 54.1, 54.2, 21 möglich, wird dies dem Fahrer ebenfalls akustisch, optisch und/oder haptisch über das HMI in Schritt 112 kommuniziert. Derartige Situationen können zum Beispiel in den in den Figuren 1.5 und 1.6 dargestellten Fahrsituationen auftreten. Hier ist zwar ein Vorwärtsfahrzug zum Einparken in die Querparklücke 3 möglich. Jedoch kann dadurch die berechnete Zielposition 13 in der Zielausrichtung entlang der Ausrichtungsgeraden 29 nicht erreicht werden. Legt der Fahrer den Rückwärtsgang ein, wird dies in Schritt 116 als Auswahl des Rückfahrzuges gewertet.

Anschließend wird in den Schritten 118 bis 124 die semi-automatische oder automatische Fahrzeugführung eingeleitet, wobei im ersten Schritt ein Rückfahrzug oder ein Vorwärtsfahrzug durchgeführt wird. Dazu werden die Längsführung, die Querführung oder beide durch das Steuergerät des Fahrassistenzsystems angesteuert. Zur Querführung wird das Lenkrad automatisch betätigt, wobei gegebenenfalls überprüft wird, ob der Fahrer die Hände vom Lenkrad genommen hat. Insbesondere kann zur Verbesserung der Rangierfähigkeit bei langsam ansteigender Geschwindigkeit des Fahrzeuges 1 oder schon im Stand mit dem Lenkvorgang begonnen werden. Zur Längsführung wird das Beschleunigungssystem des Fahrzeuges 1 von dem Steuergerät 6.1 des Fahrassistenzsystems 2 angesteuert.

Wird in Schritt 118 ein Vorwärtsfahrzug eingeleitet, wird das Fahrmanöver automatisch oder semi-automatisch durchgeführt. Dabei wird die Lenkung durch einen Regler so gesteuert, dass im Vorwärtsfahrzug zwischen dem Fahrzeug 1 und der Querparklückenbegrenzung 37.1, 37.2, 54.1, 54.2, 21 ein parametrierbarer Abstand eingehalten wird und unter Ausnutzung des zur Verfügung stehenden Rangierraumes die Abweichung des Fahrzeugs 1 von der Zielposition 13 und der Ausrichtungsgeraden 29 so stark wie möglich korrigiert wird. Dabei wird der Lenkradeinschlag insbesondere durch den Abstand zwischen dem Fahrzeug 1 und der jeweiligen Querparklückenbegrenzung 37.1, 37.2, 54.1, 54.2, 21 bestimmt. Beispielsweise kann der minimale Abstand zwischen dem Fahrzeug 1 und der jeweiligen Querparklückenbegrenzung 37.1, 37.2, 54.1, 54.2, 21 auf einen Wert im Bereich von 20 bis 50 cm in einem Speicher des Fahrassistenzsystems 2 hinterlegt sein. Während des Einparkvorganges kann weiterhin die initiale Annahme über die Querparklückengeometrie anhand weiterer zyklisch durchgeführter Messungen durch die Umfeldsensorik 6 angepasst werden. Wird hierbei die Querparklückengeometrie korrigiert, wird auch die Zielposition 13 und die Ausrichtungsgerade 29 geändert.

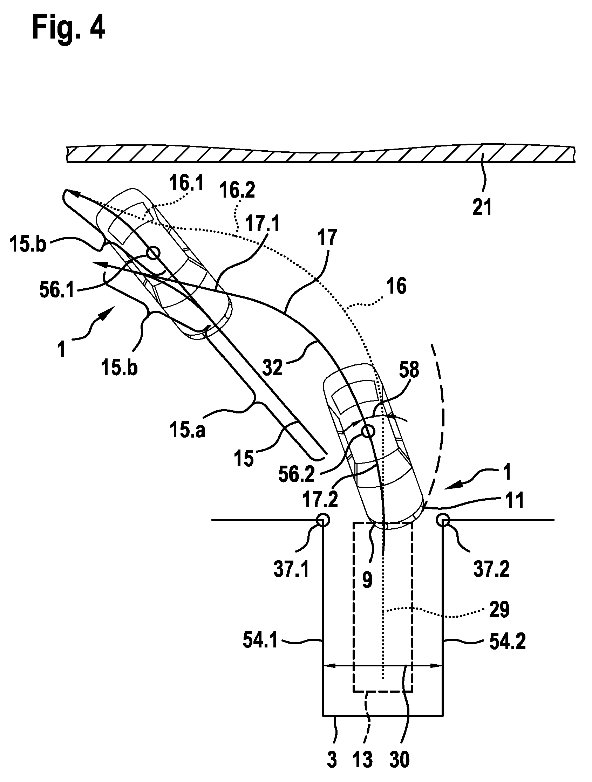

Ist der Rückfahrzug in Schritt 116 ausgewählt, kommen unterschiedliche Strategien mit mindestens zwei Zügen zum Vorwärtseinparken in Betracht. Die einzelnen Strategien werden in den Schritten 120, 122, 124 des Verfahrens durchgeführt und sind anhand der Figuren 4 bis 6 beispielhaft beschrieben.

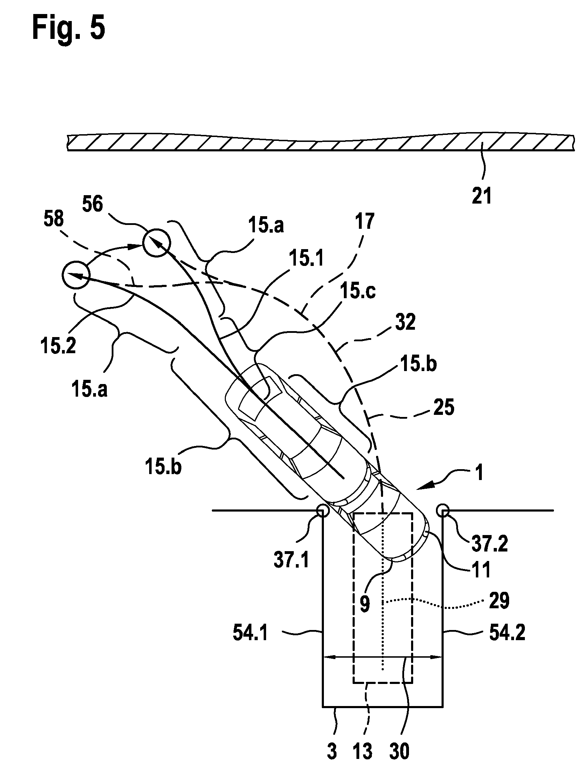

Erfindungsgemäß werden die Fahrmanöver automatisch oder semi-automatisch durchgeführt. Hierzu wird in einem ersten Schritt ein Rückfahrzug 15, 15.1, 15.2 durchgeführt, mit dem das Fahrzeug 1 geradeaus rückwärts bewegt wird. Dabei kann das Fahrzeug 1 zumindest teilweise in die Querparklücke 3 eingetaucht sein oder sich in einer Position außerhalb der Querparklücke 3 befinden, die ein Vorwärtseinparken in einem Zug nicht erlaubt. Abhängig von dem zur Verfügung stehenden Rangierraum, der durch die der Querparklücke 3 gegenüberliegende Objekte 21 bestimmt ist, wird eines der Fahrmanöver gemäß den Figuren 4 bis 6 durchgeführt. Dabei sind in den Figuren 4 und 5 zweizügige Fahrmanöver dargestellt. So wird zunächst eine Bahn bestimmt, die einen Rückfahrzug 15, 15.2 gefolgt von einem Vorwärtsfahrzug 16, 17 umfasst. Während des Fahrmanövers wird, wie in der Figur 5 dargestellt, der Rückfahrzug 15.2 oder wie in Figur 4 dargestellt der Vorwärtsfahrzug 16 an die Umgebungsbedingungen angepasst.

In Figur 4 ist eine erste Variante des erfindungsgemäßen Fahrmanövers gezeigt, wobei das Fahrzeug 1 vor Aktivierung der Führung teilweise in die Querparklücke 3 eingetaucht ist. In dieser Variante wird das Fahrzeug 1 zunächst entlang der Trajektorie 15 rückwärts bewegt. Aus den vor der Aktivierung erfassten Umfelddaten wird der Abstand zu der Querparklücke 3 gegenüberliegenden Objekten 21 sowie die Querparklückengeometrie bestimmt. Zusätzlich oder alternativ werden während des Rückfahrzuges 15 zyklisch Umfelddaten durch Umfeldsensorik 6, etwa Abstandssensoren, erfasst. Aus den zyklisch erfassten Umfelddaten werden die Querparklückengeometrie, insbesondere die Querparklückenecken 37.1, 37.2, und der Abstand zu der Querparklücke 3 gegenüberliegenden Objekten 21 bestimmt.

Hat das Fahrzeug 1 die Querparklückenecke 37.1 mit der Fahrzeugecke 9 passiert, wird die Bahn des Fahrzeuges 1 zum Einparken in die Zielposition 13 entlang der Ausrichtungsgeraden 29 neu berechnet. Der finale Vorwärtsfahrzug 17 wird dabei derart berechnet, dass abhängig von der Parklückenbreite 30 ein Winkel 58 des Fahrzeuges 1 gegenüber der Ausrichtungsgeraden 29 bestimmt wird, mit der das Fahrzeug 1 kollisionsfrei auf die Zielposition 13 in der Querparklücke 3 einfahren kann. Es wird ein Übergangssegment 17.2 berechnet, welches die schräge Einfahrt in die Querparklücke 3 beschreibt. Die Ausrichtung des Fahrzeuges 1 zu Beginn des Übergangssegments 17.2 hängt dabei neben fahrzeugspezifischen Abmessungen von der Breite 30 der Querparklücke 3 ab. Auf Basis dieser Daten wird die Bahn des Fahrzeuges 1 zum Einparken während des Fahrmanövers in die Querparklücke 3 neu berechnet. Durch den Winkel 58 verschiebt sich insbesondere das Kreisbogensegment 32, so dass ein Einparken in zwei Zügen mit geringerem Platzbedarf durchgeführt werden kann.

In der in Figur 4 gezeigten Variante ist der Rückfahrzug 15 im ersten Abschnitt 15.a geradeaus gerichtet und endet vorzugsweise in einer Kurvenfahrt 15.b, die das Fahrzeug 1, wie in Figur 4 dargestellt, in eine Position bringt, von der aus ein Einparken in einem Vorwärtsfahrzug 17 möglich ist. An den Rückfahrzug 15 schließt sich ein angepasster Vorwärtsfahrzug 17 an, der in einem ersten Schritt eine Kurvenfahrt 17.1 umfassen kann, die in einer ersten Richtung entgegengesetzt zur Querparklücke verläuft. In einem zweiten Schritt wird das Fahrzeug 1 auf ein Kreisbogensegment 32 gelenkt, das im Gegensatz zu dem Vorwärtsfahrzug 16 in einem Winkel 58 zur Ausrichtungsgeraden 29 in ein Übergangssegment 17.2 entlang der Ausrichtungsgeraden 29 übergeht. Das Kreisbogensegment 32 weist dabei einen Radius auf, der so gewählt ist, dass das Fahrzeug 1 entlang des Kreisbogensegments 32 in eine Position 56.2 gebracht wird, von der aus das Einparken entlang des Übergangssegments 17.2 auf die Ausrichtungsgerade 29 durchgeführt wird. Das Übergangssegment 17.2 bildet dabei eine Tangente an den Kreisbogen des Kreisbogensegments 32.

Des Weiteren wird, sobald das Fahrzeug 1 die Querparklückenecke 37.1 mit der Fahrzeugecke 9 passiert hat, die Endposition 56 entlang des unangepassten Rückfahrzugs 15 überprüft. Wenn die Endposition 56 des Rückfahrzugs 15 dazu führen würde, dass das Fahrzeug 1 im nächsten Vorwärtsfahrzug 17 von der Parklücke 3 weg geführt werden müsste, wird das Fahrzeug 1 statt entlang des unangepassten Rückfahrzuges 15.2 entlang des angepassten Rückfahrzuges 15.1 in einer Kurvenfahrt, wie in Figur 5 dargestellt, nach links bewegt. So kann das Fahrzeug 1 die Querparklückenecke 37.1 ohne Kollision passieren und das Fahrzeug 1 wird bereits während der Rückwärtsfahrt in eine für den nachfolgenden Vorwärtsfahrzug 17 günstigere Position gebracht.

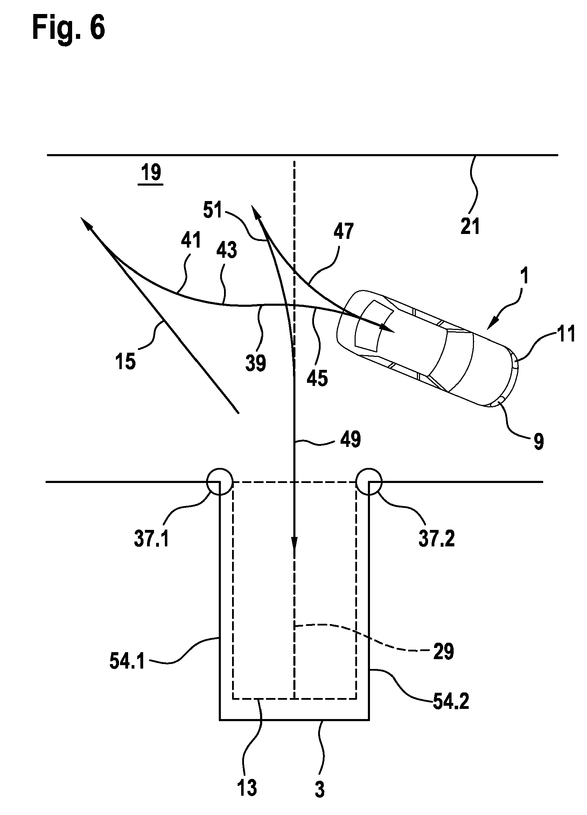

Durch den angepassten Rückfahrzug 15.1 verschiebt sich die Endposition 56 des Fahrzeuges 1 so, dass im Unterschied zum Rückfahrzug 15.2 eine Position 56 erreicht wird, die ein einfacheres und sicheres Einfahren in die Querparklücke 3 mit einem Vorwärtsfahrzug 17 erlaubt. Dazu umfasst der Rückfahrzug 15.1 eine Kurvenfahrt im Abschnitt 15.c, die das Fahrzeug 1 nach links bewegt, um daraufhin mit einer Kurve 15.a in Richtung der Ausrichtungsgerade 29 abgeschlossen zu werden. Die abschließende Rechtskurve 15.a dient dazu, das Fahrzeug 1 in eine günstige, näherungsweise tangentiale Position zum Kreisbogen 32 des Vorwärtsfahrzugs 17 zu bewegen. Die Endposition 56 des angepassten Rückfahrzuges 17 beansprucht in der in Figur 4 dargestellten Situation zwar mehr Rangierraum. Jedoch kann vermieden werden, dass das Fahrzeug 1 im Vorwärtsfahrzug 17 zu der der Querparklücke 3 gegenüber liegenden Seite bewegt wird. Dies ist besonders vorteilhaft, da ein Weglenken von der Querparklücke 3 im Vorwärtsfahrzug 17 von dem Fahrer insbesondere dann als unnatürliches Verhalten wahrgenommen wird, wenn das Fahrzeug 1 in Richtung der der Parklücke 3 gegnüberliegenden Seite 21 bewegt wird. Ein Rückfahrzug der Variante 15.1 kann auch durchgeführt werden, um eine Endposition 56 zu erreichen, die insgesamt weniger Rangierraum beansprucht, oder um bei einem vierzügigen Manöver, wie in Figur 6 gezeigt, eine günstigere Ausgangsposition für den Folgezug 39 zu erreichen.

Taucht das Fahrzeug 1 zumindest teilweise in die Querparklücke ein, wird die Lenkung vorrangig durch einen Regler gesteuert. In der in Figur 4 dargestellten Variante setzt die reglerbasierte Steuerung etwa ab der Position 56.2 auf dem Übergangssegment 17.2 ein. Zur regelbasierten Lenksterung wird im Vorwärtsfahrzug 16, 17 zwischen dem Fahrzeug 1 und der Querparklückenbegrenzung 37.1, 37.2, 54.1, 54.2 ein parametrierbarer Abstand eingehalten und unter Ausnutzung des zur Verfügung stehenden Rangierraumes die Abweichung des Fahrzeugs 1 von der Zielposition 13 und der Ausrichtungsgeraden 29 so stark wie möglich korrigiert. Dabei wird der Lenkradeinschlag insbesondere durch den Abstand zwischen dem Fahrzeug 1 und der jeweiligen Querparklückenbegrenzung 37.1, 37.2, 54.1, 54.2 bestimmt. Während des Einparkvorganges kann weiterhin die initiale Annahme über die Querparklückengeometrie anhand weiterer zyklisch durchgeführter Messungen der Umfeldsensorik 6 angepasst werden. Wird hierbei die Querparklückengeometrie korrigiert, wird auch die Zielposition 13 und die Ausrichtungsgerade 29 geändert.

Im Unterschied zu den Figuren 4 und 5 zeigt Figur 6 ein Fahrmanöver, das mehr als zwei Züge umfasst. Dieses Fahrmanöver benötigt den geringsten Rangierraum. Allerdings sind mehr als zwei Fahrzüge notwendig, um in eine Querparklücke 3 einzuparken.

Wie in der in den Figuren 4 und 5 dargestellten Ausführungsform wird auch bei einem Einparkmanöver in vier Zügen als erstes ein Rückfahrzug 15 durchgeführt, bei dem das Fahrzeug 1 geradeaus rückwärts bewegt wird. Wenn eine Begrenzung 21 den Weg begrenzt, der bei dem Rückfahrzug zurückgelegt werden kann, wird das Fahrzeug 1 bis auf einen vorgegebenen Abstand zu der Begrenzung 21 bewegt. Der Abstand ist dabei zum Beispiel in einem Speicher des Fahrassistenzsystems 2, mit dem das Fahrmanöver durchgeführt wird, hinterlegt. Der Abstand kann dabei einen festen Wert einnehmen oder einen von der Geschwindigkeit des Fahrzeugs 1 abhängigen. So ist es zum Beispiel möglich, bei einer höheren Geschwindigkeit einen größeren Abstand zu wählen als bei einer kleineren Geschwindigkeit. Der Rückfahrzug 15 kann auch in seiner Länge begrenzt werden, um das Fahrzeug 1, insbesondere bei ungünstigen Startpositionen für ein zweizügiges Einparken, nicht zu weit von der Querparklücke 3 wegzubewegen.

An den Rückfahrzug 15 schließt sich ein erster Vorwärtsfahrzug 39 an. Mit dem Vorwärtsfahrzug wird das Fahrzeug 1 an der Querparklücke 3 zumindest teilweise vorbeigeführt. Hierzu wird das Fahrzeug 1 in dem Vorwärtsfahrzug 39 in ein erstes Kreisbogensegment 41 gelenkt, das einen Radius aufweist, der derart gerichtet ist, dass das Fahrzeug 1 einen Bogen weg von der Querparklücke 3 fährt. An das erste Kreisbogensegment 41 schließt sich ein Übergangssegment 43 an, entlang dem die lenkbaren Räder des Fahrzeugs 1 in die entgegengesetzte Richtung gelenkt werden, um ein zweites Kreisbogensegment 45 in der entgegengesetzten Richtung anzuschließen. Mit dem zweiten Kreisbogensegment 45 wird der Vorwärtsfahrzug 39 beendet. Der Vorwärtsfahrzug 39 kann alternativ auch als einfacher Kreisbogen oder als Kombination aus Kreisbogen- und Geradensegment durchgeführt werden, wenn dadurch eine gleichwertige oder bessere Startposition für den Folgezug erreicht werden kann. Wenn sich seitlich vor dem begrenzten Bereich 3 statt einer Parklückenecke 37.2 eine Wand, wie in Figur 2.2 dargestellt, befindet, wird die Endposition des Vorwärtsfahrzugs 39 so gewählt, dass das Fahrzeug 1 mit einem möglichst kleinen Winkel zur Ausrichtungsgerade 29 vor der Wand steht.

Nach dem ersten Vorwärtsfahrzug 39 folgt ein zweiter Rückfahrzug 47. Beim Rückfahrzug 47 fährt das Fahrzeug 1 mit Teil- oder Vollausschlag der lenkbaren Räder einen Kreisbogen bis eine Ausgangsposition für einen abschließenden zweiten Vorwärtsfahrzug 49 erreicht ist. Zur Reduzierung des Platzbedarfs, insbesondere wenn der Platz zur gegenüberliegenden Seite begrenzt ist oder wenn bei Rückwärtsfahrt mit Vollausschlag der lenkbaren Räder die Möglichkeit einer Kollision mit einem Objekt auf der Querparklückenseite bestünde, kann der Rückfahrzug 47 auch ein initiales Segment mit stetig wachsender Krümmung enthalten. Der zweite Vorwärtsfahrzug 49, der sich an den zweiten Rückfahrzug 47 anschließt, umfasst gegebenenfalls einen Kreisbogen mit einem Ausschlag der lenkbaren Räder in der entgegengesetzten Richtung zum Kreisbogensegment des zweiten Rückfahrzugs 47, ein Übergangssegment 51, um die Räder in Richtung der Ausrichtungsgerade 29 auszurichten und die Ausrichtungsgerade 29. Entlang der Ausrichtungsgerade 29 wird das Fahrzeug 1 in seine Endposition in der Querparklücke 3 geparkt.

Wenn das Fahrzeug 1 zu Beginn des Einparkmanövers nicht wie in einer der Figuren 1.1 bis 1.3 ausgerichtet ist, sondern zumindest teilweise an der Querparklücke 3 vorbeigefahren ist, kann ein Einparkmanöver durchgeführt werden, das lediglich den zweiten Rückfahrzug 47 und den zweiten Vorwärtsfahrzug 49 des in Figur 6 dargestellten Einparkmanövers umfasst.

Um zu vermeiden, dass ein weiteres Fahrzeug die Querparklücke 3 belegt, während das Einparkmanöver durchgeführt wird, ist es bei dem in Figur 6 dargestellten Einparkmanöver bevorzugt, wenn der Vorwärtsfahrzug 39 so endet, dass die Querparklücke 3 zumindest teilweise blockiert wird. Hierzu wird das Fahrzeug 1 so bewegt, dass ein Teil des Fahrzeugs 1 in der Endposition des Vorwärtsfahrzugs 39 noch vor der Querparklücke 3 steht.

Um die gewünschte Endposition in der Querparklücke 3 zu erreichen, wird während des gesamten Einparkmanövers die Umgebung des Fahrzeugs 1 weiter erfasst und geprüft, ob die zuvor erfassten Daten noch mit den aktuell erfassten übereinstimmen. Insbesondere beim Eintauchen in die Querparklücke geht die Lenksteuerung in eine regelbasierte Steuerung über, die wie oben beschrieben ein parametrierbarer Abstand zwischen dem Fahrzeug 1 und der Querparklückenbegrenzung 37.1, 37.2, 54.1, 54.2 einhält. Bei einer Abweichung besteht die Möglichkeit einer Nachkorrektur. Bei der Nachkorrektur wird die Ausrichtungsgerade 29 neu berechnet und das Fahrzeug 1 so gesteuert, dass es entlang der korrigierten Ausrichtungsgerade 29 bewegt wird.

Wenn während des Parkvorgangs gemäß einer der zuvor beschriebenen Bahnen ersichtlich wird, dass die parametrierten seitlichen Sicherheitsabstände bei Weiterfahrt in einer sich verjüngenden Querparklücke nicht mehr eingehalten würden, oder ein Objekt in der Querparklücke die Weiterfahrt blockiert, wird der Parkvorgang beendet.

Der Fahrer kann während des Fahrmanövers auch dann in einen Folgezug übergehen, wenn das Ende des aktuellen Zuges noch nicht erreicht ist, indem der Fahrer den Gang wechselt. Das Computerprogramm wird dann ausgehend von der aktuellen Position des Fahrzeugs 1 einen geeigneten Folgezug anbieten. Dies bedeutet auch, dass statt eines finalen Vorwärtsfahrzugs 17 ein Folgezug 39 für ein vierzügiges Fahrmanöver angeboten wird, wenn der zur Verfügung stehende Rangierraum für einen Fahrzug, der die Zielposition 13 kollisionsfrei erreicht, nicht ausreichend ist.

Insgesamt erlaubt es die Erfindung unter Berücksichtigung des zur Verfügung stehenden Rangierraumes, das Fahrmanöver adaptiv anzupassen. Insbesondere zweizügige Fahrmanöver können in unterschiedlichen Varianten ausgeführt werden. Dies erhöht die Flexibilität des erfindungsgemäßen Fahrassistenzsystems 2, wobei dem Fahrer situationsbedingt die einfachste und schnellste Variante zum Vorwärtseinparken bereitgestellt werden kann. Dadurch wirkt das Unterstützte Fahren in der Wahrnehmung des Fahrers natürlich und erhöht dessen Akzeptanz.

Die Erfindung ist nicht auf die hier beschriebenen Ausführungsbeispiele und die darin hervorgehobenen Aspekte beschränkt. Vielmehr ist innerhalb des durch die anhängigen Ansprüche angegeben Bereiches eine Vielzahl von Abwandlungen möglich, die im Rahmen fachmännischen Handels liegen.

## Patentansprüche

1. Verfahren zum Durchführen eines mindestens zweizügigen Fahrmanövers beim zumindest semi-automatischen Vorwärtseinfahren mit einem Fahrzeug (1) in einen seitlich der Fahrbahn gelegenen, begrenzten Bereich (3), wobei eine Bahn zum Vorwärtseinfahren mindestens einen Rückfahrzug (15, 15.1, 15.2) gefolgt von mindestens einem Vorwärtsfahrzug (16, 17) umfasst, mit folgenden Schritten:
a) zyklisches Bereitstellen von Umfelddaten mit Umfeldsensorik (6) und Auswerten der Umfelddaten in Bezug auf den begrenzten Bereich (3) und Objekte (21), die dem begrenzten Bereich (3) gegenüberliegen;
b) Bestimmen einer Bahn in Abhängigkeit von dem begrenzten Bereich (3) und Objekten (21), die dem begrenzten Bereich (3) gegenüberliegen beginnend mit einem Rückfahrzug (15, 15.1,, 15.2); und
c) zumindest semi-automatisches Bewegen des Fahrzeuges (1) entlang der in Schritt b)bestimmten Bahn,
**dadurch gekennzeichnet, dass** während des Rückfahrzugs (15, 15.1, 15.2) mindestens ein Vorwärtsfahrzug (16, 17) der Bahn in Abhängigkeit von dem begrenzten Bereich (3) und Objekten (21), die dem begrenzten Bereich (3) gegenüberliegen, während des Fahrmanövers angepasst wird, wobei überprüft wird, ob der Vorwärtsfahrzug (16, 17) das Fahrzeug (1) von dem begrenzten Bereich (3) weglenken würde, und falls dies zutrifft, der Rückfahrzug (15, 15.1, 15.2) angepasst wird.

2. Verfahren gemäß Anspruch 1, wobei die Bahn angepasst wird, sobald vorne am Fahrzeug (1) verbaute Umfeldsensorik (6) eine zuletzt zu erfassende Bereichsecke (37.1, 37.2) während des Rückfahrzuges (15, 15.1, 15.2) detektiert.

3. Verfahren gemäß einem der Ansprüche 1 und 2, wobei die Bahn einen Rückfahrzug (15.1, 15.2) umfasst, der zumindest teilweise (15.b) geradeaus verläuft, und während der Rückfahrt der Rückfahrzug (15.1, 15.2) durch eine erste und eine zweite der ersten entgegengesetzten Kurvenfahrt (15.a) angepasst wird, um das Fahrzeug (1) in eine Position (56) zu bringen, die das Einfahren in den begrenzten Bereich (3) mit einem Vorwärtsfahrzug (17) erlaubt, und der Vorwärtsfahrzug (17) ein Kreisbogensegment (32) umfasst, das tangential in ein entlang einer Ausrichtungsgeraden (29) gerichtetes Übergangssegment (25) übergeht.

4. Verfahren gemäß einem der Ansprüche 1 und 2, wobei die Bahn einen zumindest teilweise geradeaus gerichteten Rückfahrzug (15) umfasst, um das Fahrzeug (1) in eine Position zu bringen, die das Einparken mit einem Vorwärtsfahrzug (16, 17) erlaubt, und die Bahn weiterhin einen angepassten Vorwärtsfahrzug (17) umfasst, wobei der angepasste Vorwärtsfahrzug (17) eine erste Kurvenfahrt (17.1) in eine erste Richtung entgegen dem begrenzten Bereich (3) gefolgt von einem Kreisbogensegment (32) in eine zweite der ersten entgegengesetzten Richtung umfasst, das stetig in ein Übergangssegment (17.2) mit einem Winkel (58) zur Ausrichtungsgeraden (29) gefolgt von einer Kurvenfahrt in die Ausrichtungsgerade (29) übergeht.

5. Verfahren gemäß Anspruch 4, wobei das Übergangssegment (17.2) tangential vom Kreisbogensegment (32) verläuft und der Winkel (58) zwischen dem Übergangssegment (17.2) und der Ausrichtungsgeraden (29) bestimmt wird, sobald die letzte Bereichsecke (37.1, 37.2) erfasst wird.

6. Verfahren gemäß Anspruch 4, wobei der Winkel (58) zwischen dem Übergangssegment (17.2) und der Ausrichtungsgeraden (29) von einer Breite (30) des begrenzten Bereiches (3) und fahrzeugspezifischen Abmessungen abhängt und so bestimmt ist, dass der Vorwärtsfahrzug (16, 17) das Erreichen einer Zielposition (13) in dem begrenzten Bereich (3) erlaubt.

7. Verfahren gemäß einem der Ansprüche 1 bis 6, wobei ein Bewegen des Fahrzeugs (1) innerhalb des begrenzten Bereichs (3) mit einem Regler durchgeführt wird, der den Abstand zu Begrenzungen (37.1, 37.2, 54.1, 54.2, 21) des begrenzten Bereiches (3) im Wesentlichen konstant hält.

8. Verfahren gemäß Anspruch 7, wobei der Regler den Abstand einer vorderen Fahrzeugecke (11) zu Begrenzungen (37.2, 54.2) des begrenzten Bereiches (3) im Wesentlichen konstant hält.

9. Verfahren zur Unterstützung eines Fahrers beim zumindest semi-automatischen Vorwärtseinfahren mit einem Fahrzeug in einen seitlich der Fahrbahn gelegenen, begrenzten Bereich mit folgenden Schritten:
i) Bereitstellen (102) von Umfelddaten mit Umfeldsensorik (3) und Auswerten der Umfelddaten in Bezug auf den begrenzten Bereich (3) und Objekte (21), die dem begrenzten Bereich (3) gegenüberliegen;
ii) Einleiten (104) eines zumindest semi-autonomen Fahrmanövers in Reaktion auf ein Aktivierungssignal;
iii) Prüfen (108, 110), ob das Vorwärtseinfahren in einem Vorwärtsfahrzug möglich ist;
iv) Durchführen (116, 120, 122, 124) des mindestens zweizügigen Fahrmanövers gemäß einem der Ansprüche 1 bis 8, wenn das Vorwärtseinfahren in einem Vorwärtsfahrzug nicht möglich ist.

10. Computerprogramm zur Durchführung eines der Verfahren nach einem der Ansprüche 1 bis 9, wenn das Computerprogramm auf einer programmierbaren Computereinrichtung ausgeführt wird.

11. Vorrichtung (2) zur Durchführung des Verfahrens gemäß einem der Ansprüche 1 bis 9, umfassend eine Umfeldsensorik (6) zum Erfassen von einem seitlich der Fahrbahn gelegenen, begrenzten Bereich (3) und Objekten (21), die dem begrenzten Bereich (3) gegenüberliegen, Mittel zur Bestimmung von Bahnen (6.1) mit mindestens einem Rückwärtsfahrzug (15, 15.1, 15.2), gefolgt von mindestens einem Vorwärtsfahrzug (16, 17) und Mittel zur Durchführung eines zumindest semi-automatischen Fahrmanövers (6.1) entlang einer bestimmten Bahn, wobei mindestens ein Rückfahrzug (15, 15.1, 15.2) oder mindestens ein Vorwärtsfahrzug (16, 17) der bestimmten Bahn in Abhängigkeit von dem begrenzten Bereich (3) und Objekten (21), die dem begrenzten Bereich (3) gegenüberliegen, während des Fahrmanövers angepasst wird, **dadurch gekennzeichnet, dass** während des Rückfahrzugs (15, 15.1, 15.2) mindestens ein Vorwärtsfahrzug (16, 17) der Bahn in Abhängigkeit von dem begrenzten Bereich (3) und Objekten (21), die dem begrenzten Bereich (3) gegenüberliegen, während des Fahrmanövers angepasst wird, wobei überprüft wird, ob der Vorwärtsfahrzug (16, 17) das Fahrzeug (1) von dem begrenzten Bereich (3) weglenken würde, und falls dies zutrifft, der Rückfahrzug (15, 15.1, 15.2) angepasst wird.

## Claims

1. Method for carrying out an at least two-part driving manoeuvre during at least semi-automatic forward driving with a vehicle (1) on to a delimited area (3) which is located to the side of the carriageway, wherein a path for driving in forwards comprises at least one reversing movement (15, 15.1, 15.2) followed by at least one forward movement (16, 17), having the following steps:
a) cyclically making available surroundings data with a surroundings sensor system (6) and evaluating the surroundings data with respect to the delimited area (3) and objects (21) which are located opposite the delimited area (3) ;
b) determining a path as a function of the delimited area (3) and objects (21) which are located opposite the delimited area (3), starting with a reversing movement (15, 15.1, 15.2); and
c) at least semi-automatic movement of the vehicle (1) along the path determined in step (b), **characterized in that** during the reversing movement (15, 15.1, 15.2) at least one forward movement (16, 17) of the path is adapted during the driving manoeuvre, as a function of the delimited area (3) and objects (21) which are located opposite the delimited area (3), wherein it is checked whether the forward movement (16, 17) would steer the vehicle (1) away from the delimited area (3), and if this is the case the reversing movement (15, 15.1, 15.2) is adapted.

2. Method according to Claim 1, wherein the path is adapted as soon as a surrounding sensor system (6) which is installed on the front of the vehicle (1) detects, during the reversing movement (15, 15.1, 15.2), a corner (37.1, 37.2) of the area which is the last to be detected.

3. Method according to one of Claims 1 and 2, wherein the path comprises a reversing movement (15.1, 15.2) which runs at least partially (15.b) straight ahead, and during the reversing of the reversing movement (15.1, 15.2) is adapted by a first, and a second cornering movement (15.a) opposed to the first, in order to move the vehicle (1) into a position (56) which permits it to drive into the delimited area (3) with a forward movement (17), and the forward movement (17) comprises a circular-are-shaped segment (32) which merges tangentially with a transitional segment (25) which is directed along an orientation straight line (29).

4. Method according to one of Claims 1 and 2, wherein the path comprises a reversing movement (15) which is directed at least partially straight ahead, in order to move the vehicle (1) into a position which permits parking with a forward movement (16, 17), and the path also comprises an adapted forward movement (17), wherein the adapted forward movement (17) comprises a first cornering movement (17.1) in a first direction counter to the delimited area (3) followed by a circular-arc-shaped-segment (32) in a second direction opposed to the first, which circular-arc-shaped segment (32) merges continuously with a transitional segment (17.2) at an angle (58) to the orientation straight line (29) followed by a cornering movement into the orientation straight line (29).

5. Method according to Claim 4, wherein the transitional segment (17.2) runs tangentially from the circular-arc-shaped segment (32), and the angle (58) between the transitional segment (17.2) and the orientation straight line (29) is determined as soon as the last corner (37.1, 37.2) of the area is detected.

6. Method according to Claim 4, wherein the angle (58) between the transitional segment (17.2) and the orientation straight line (29) depends on a width (30) of the delimited area (3) and vehicle-specific dimensions and is determined in such a way that the forward movement (16, 17) permits a target position (13) in the delimited area (3) to be reached.

7. Method according to one of Claims 1 to 6, wherein a movement of the vehicle (1) within the delimited area (3) is carried out with a controller which keeps the distance from boundaries (37.1, 37.2, 54.1, 54.2, 21) of the delimited area (3) essentially constant.

8. Method according to Claim 7, wherein the controller keeps the distance of a front corner (11) of the vehicle from boundaries (37.2, 54.2) of the delimited area (3) essentially constant.

9. Method for assisting a driver during at least semi-automatic forward driving with a vehicle onto a delimited area which is located to the side of the carriageway, having the following steps:
i) making available (102) surroundings data with a surroundings sensor system (3) and evaluating the surroundings data with respect to the delimited area (3) and objects (21) which are located opposite the delimited area (3) ;
ii) initiating (104) an at least semi-autonomous driving manoeuvre in reaction to an activation signal;
iii) checking (108, 110) whether it is possible to drive in forward in a forward movement;
iv) carrying out (116, 120, 122, 124) the at least two-part driving manoeuvre according to one of Claims 1 to 8 if it is not possible to drive in forwards in a forward movement.

10. Computer program for carrying out one of the methods according to one of Claims 1 to 9 if the computer program is run on a programmable computer device.

11. Device (2) for carrying out the method according to one of Claims 1 to 9, comprising a surroundings sensors system (6) for detecting a delimited area (3) which is located to the side of the carriageway, and objects (21) which are located opposite the delimited area (3), by means of determining paths (6.1) with at least one reversing movement (15, 15.1, 15.2) followed by at least one forward movement (16, 17), and means for carrying out an at least semi-automatic driving manoeuvre (6.1) along a determined path, wherein at least one reversing movement (15, 15.1, 15.2) or at least one forward movement (16, 17) of the determined path is adapted during the driving manoeuvre, as a function of the delimited area (3) and objects (21) which are located opposite the delimited area (3), **characterized in that** during the reversing movement (15, 15.1, 15.2) at least one forward movement (16, 17) of the path is adapted during the driving manoeuvre as a function of the delimited area (3) and objects (21) which are located opposite the delimited area (3) wherein it is checked whether the forward movement (16, 17) would steer the vehicle (1) away from the delimited area (3), and if this is the case the reversing movement (15, 15.1, 15.2) is adapted.

## Revendications

1. Procédé pour effectuer une manoeuvre de conduite en au moins deux passes lors de l'entrée vers l'avant de manière au moins semi-automatique au moyen d'un véhicule (1) dans une zone délimitée (3) située latéralement par rapport à la chaussée, dans lequel une voie d'entrée vers l'avant comprend au moins une passe de déplacement vers l'arrière (15, 15.1, 15.2) suivie d'au moins une passe de déplacement vers l'avant (16, 17), comprenant les étapes consistant à :
a) fournir cycliquement des données d'environnement au moyen de capteurs d'environnement (6) et évaluer les données d'environnement en ce qui concerne la zone délimitée (3) et des objets (21) qui sont opposés à la zone délimitée (3) ;
b) déterminer une voie en fonction de la zone délimitée (3) et d'objets (21) qui sont opposés à la zone délimitée (3) en commençant par une passe de déplacement vers l'arrière (15, 15.1, 15.2) ; et
c) déplacer de manière au moins semi-automatique le véhicule (1) le long de la voie déterminée à l'étape b),
**caractérisé en ce que**, pendant la passe de déplacement vers l'arrière (15, 15.1, 15.2), au moins une passe de déplacement vers l'avant (16, 17) est adaptée à la voie en fonction de la zone délimitée (3) et d'objets (21) qui sont opposés à la zone délimitée (3) pendant la manoeuvre de conduite, dans lequel il est vérifié si la passe de déplacement vers l'avant (16, 17) a dévié le véhicule (1) de la zone délimitée (3) et, dans le cas où cela se produit, la passe de déplacement vers l'arrière (15, 15.1, 15.2) est adaptée.

2. Procédé selon la revendication 1, dans lequel la voie est adaptée dès que les capteurs d'environnement (6) intégrés à l'avant du véhicule (1) détectent en dernier des angles (37.1, 37.2) à détecter de la zone pendant la passe de déplacement vers l'arrière (15, 15.1, 15.2).

3. Procédé selon l'une quelconque des revendications 1 et 2, dans lequel la voie comprend un passe de trajet vers l'arrière (15.1, 15.2) qui s'étend au moins partiellement (15.b) de manière rectiligne et dans lequel, pendant le trajet vers l'arrière, la passe de déplacement vers l'arrière (15.1, 15.2) est adaptée par des premier et second trajets incurvés (15.a) mutuellement opposés afin d'amener le véhicule (1) à une position (56) qui permet l'entrée dans la zone délimitée (3) par une passe de déplacement vers l'avant (17) et la passe de déplacement vers l'avant (17) comprend un segment d'arc de cercle (32) qui effectue une transition tangentielle en un segment de transition (25) orienté suivant une droite d'alignement (29).

4. Procédé selon l'une quelconque des revendications 1 et 2, dans lequel la voie comprend un passe de déplacement vers l'arrière (15) au moins partiellement dirigée de manière rectiligne afin d'amener le véhicule (1) à une position qui permet le stationnement par une passe de déplacement vers l'avant (16, 17), et la voie comprend en outre une passe de déplacement vers l'avant (17) adaptée, dans lequel la passe de déplacement vers l'avant (17) adaptée comprend un premier trajet incurvé (17.1) dans une première direction opposée à la zone délimitée (3) suivi d'un segment d'arc de cercle (32) dans une seconde direction opposée à la première direction, qui effectue une transition continue en un segment de transition (17.2) sous un angle (58) par rapport à la droite d'alignement (29), suivi d'un déplacement incurvé vers la droite d'alignement (29).

5. Procédé selon la revendication 4, dans lequel le segment de transition (17.2) s'étend tangentiellement au segment d'arc de cercle (32) et l'angle (58) entre le segment de transition (17.2) et les droites d'alignement (29) est déterminé dès que le dernier angle de zone (37.1, 37.2) a été détecté.

6. Procédé selon la revendication 4, dans lequel l'angle (58) entre le segment de transition (17.2) et les droites d'alignement (29) dépend d'une largeur (30) de la zone délimitée (3) et de mesures propres au véhicule et est déterminé de manière à ce que la passe de déplacement vers l'avant (16, 17) permette d'atteindre une position cible (13) dans la zone délimitée (3).

7. Procédé selon l'une quelconque des revendications 1 à 6, dans lequel un mouvement du véhicule (1) à l'intérieur de la zone délimitée (3) est effectué au moyen d'un dispositif de régulation qui maintient sensiblement constante la distance par rapport aux limites (37.1, 37.2, 54.1, 54.2, 21) de la zone délimitée (3).

8. Procédé selon la revendication 7, dans lequel le dispositif de régulation maintient constante la distance d'un autre angle (11) avant du véhicule par rapport aux limites (37.2, 54.2) de la zone délimitée (3).

9. Procédé d'assistance à la conduite lors de l'entrée vers l'avant de manière au moins semi-automatique au moyen d'un véhicule dans une zone délimitée située latéralement par rapport à la voie de déplacement, comprenant les étapes consistant à :
i) fournir (102) des données d'environnement au moyen de capteurs d'environnement (3), et évaluer les données d'environnement en ce qui concerne la zone délimitée (3) et des objets (21) qui sont opposés à la zone délimitée (3) ;
ii) amorcer (104) une manoeuvre de conduite de manière au moins semi-automatique en réaction à un signal d'activation ;
iii) vérifier (108, 110) si une entrée vers l'avant est possible par une passe de déplacement vers l'avant ;
iv) effectuer (116, 120, 122, 124) la manoeuvre de conduite en au moins deux passes selon l'une des revendications 1 à 8 lorsque l'entrée vers l'avant par une passe de déplacement vers l'avant n'est pas possible.

10. Programme informatique destiné à mettre en oeuvre le procédé selon l'une quelconque des revendications 1 à 9 lorsque le programme informatique est exécuté sur un dispositif informatique programmable.

11. Dispositif informatique (2) destiné à mettre en oeuvre le procédé selon l'une quelconque des revendications 1 à 9, comprenant des capteurs d'environnement (6) destinés à détecter une zone délimitée (3) située latéralement par rapport à la voie de déplacement, et des objets (21) qui sont opposés à la zone délimitée (3), des moyens destinés à déterminer des voies (6.1) par au moins une passe de déplacement vers l'arrière (15, 15.1, 15.2) suivie par au moins une passe de déplacement vers l'avant (16, 17), et des moyens destinés à effectuer une manoeuvre de conduite (6.1) de manière au moins semi-automatique le long d'une voie déterminée, dans lequel au moins une passe de déplacement vers l'arrière (15, 15.1, 15.2) ou au moins une passe de déplacement vers l'avant (16, 17) de la voie déterminée est adaptée en fonction de la zone délimitée (3) et d'objets (21) qui sont opposés à la zone délimitée (3), pendant la manoeuvre de conduite, **caractérisé en ce que**, pendant la passe de déplacement vers l'arrière (15, 15.1, 15.2), au moins une passe de déplacement vers l'avant (16, 17) de la voie est adaptée en fonction de la zone délimitée (3) et d'objets (21) qui sont opposés à la zone délimitée (3), pendant la manoeuvre de conduite, dans lequel il est vérifié si la passe de déplacement vers l'avant (16, 17) a dévié le véhicule (1) de la zone délimitée (3) et, dans le cas où cela se produit, la passe de déplacement vers l'arrière (15, 15.1, 15.2) est adaptée.
